# EUROPÄISCHE PATENTSCHRIFT

(11) **EP 2 101 163 B1**
(45) Veröffentlichungstag und Bekanntmachung des Hinweises auf die Patenterteilung: **21.08.2013**
(21) Anmeldenummer: 09002797.0
(22) Anmeldetag: 27.02.2009
(51) Int. Cl.: G01L 21/10, G01L 21/32

(54) **Verfahren zum Betrieb eines Totaldrucktransmitters**
Method for operating a total pressure transmitter
Procédé destiné au fonctionnement d'un transmetteur de pression totale

(30) Priorität: 10.03.2008 DE 102008013455
(43) Veröffentlichungstag der Anmeldung: 16.09.2009
(73) Patentinhaber: Pfeiffer Vacuum GmbH, 35614 Aßlar (DE)
(72) Erfinder: Shopphoff, Andreas, 35614 Asslar (DE); Salzberger, Frank, P., 94036 Passau (DE)

(56) Entgegenhaltungen:
- EP-A1- 0 658 755
- DE-A1- 10 238 961
- US-A1- 2006 123 915

## Beschreibung

Die Erfindung betrifft ein Verfahren zum Betrieb eines Totaldrucktransmitters nach dem Oberbegriff des ersten Patentanspruches.

Im Stand der Technik sind Totaldrucktransmitter zur Messung des Druckes in einem weiten Druckbereich zwischen Atmosphäre und Ultrahochvakuum bekannt. Diese Messung wird durch Anordnen zweier auf unterschiedlichen physikalischen Wirkweisen beruhender Sensoren möglich. Jeder der Sensoren arbeitet in einem Druckbereich, in dem sein Wirkweise eine möglichst genaue Druckbestimmung erlaubt. Solche Sensoren sind aus US 2006/0123915 und EP0658755 bekannt.

Zum Einsatz kommen z.B. Wärmeleitungsmessröhren, auch als "Pirani"-Messröhren bekannt, welche als Sensoren in einem Druckbereich von 10⁻³ bis 1000 mbar verwendet werden. Alternativ können für diesen Druckbereich Sensoren eingesetzt werden, die mit piezoresistiven Effekten arbeiten. Der sich nach niedrigeren Drücken anschließende Bereich kann durch Heißkathoden, z.B. nach "Bayard-Alpert" oder durch Kaltkathoden, z.B. nach "Penning" erfasst werden.

Die Druckbereiche der beiden Sensoren überlappen, wobei innerhalb dieses Überlappbereichs ein Druckschwellwert liegt. Über- oder unterschreitet der Druck innerhalb des Vakuumsystems diesen Druckschwellwert, wird von dem einem auf den anderen Sensor umgeschaltet. Nach einem aus der DE 102 38 961 bekannten Arbeitsverfahren für solche Totaldrucktransmitter wird durch periodischen Betrieb des Sensors für niedrige Drücke bei gleichzeitigem Betrieb des anderen Sensors eine stetige Kennlinie des Totaldrucktransmitters erreicht.

Der Nachteil dieser gattungsgemäßen Totaldrucktransmitter ist, dass die Umschaltung von dem einem auf den anderen Sensor druckabhängig bei einem vor dem Betriebsbeginn festgelegten Druckschwellwert erfolgt. Daher kann im Verlaufe eines Prozesses die ungünstige Situation eintreten, dass Druckschwellwert und zu messender Druck sehr ähnlich sind. Dies führt zu Ungenauigkeiten in der Messung und zu unnötig vielen Umschaltvorgängen zwischen den Sensoren. Diese mangelnde Anpassung an die Prozessanforderungen wird als nachteilig empfungen und führt unter anderem aufgrund der Umschaltvorgänge zu einer Verringerung der Lebensdauer.

Aufgabe der Erfindung war es daher, ein Verfahren für einen Totaldrucktransmitter vorzustellen, mit welchem dieser besser an die Prozessanforderungen angepasst werden kann.

Gelöst wird diese Aufgabe durch ein Verfahren mit den Merkmalen des ersten Patentanspruchs. Die Patentansprüche 2 bis 7 geben vorteilhafte Weiterbildungen der Erfindung an.

Durch Verändern des Druckschwellwerts während des Betriebes eines der Sensorelemente ist es möglich, eine Anpassung während des laufenden Prozesses vorzunehmen. Insbesondere können für längere Zeit anhaltende Annäherungen von Prozessdruck und Druckschwellwert vermieden werden. Unnötige Umschaltvorgänge werden verhindert und so die Lebensdauer der Sensorelemente erhöht.

Dieser Vorteil lässt sich vertiefen, wenn in einer Weiterbildung der Druckschwellwert während des Betriebes des ersten Sensorelements verändert wird.

In einer anderen Weiterbildung wird das zweite Sensorelement für eine benutzerdefinierte Zeit abgeschaltet. Hierdurch wird zum einen die Lebensdauer des Sensorelements erhöht. Zum anderen wird eine gegenseitige Störung von Druckmessung und Prozess durch zeitweiliges Abschaltung komplett verhindert.

Die vorgenannten Vorteile kommen besonders bei Verwendung eines Heißkathodensensors in Kombination mit einem Wärmeleitungssensor zur Geltung.

Durch Verwendung eines elektronischen, insbesondere digitalen, Schalteingangs an einer Elektronik des Totaldrucktransmitters zur Änderung des Druckschwellwerts ist eine Kopplung an die Prozesssteuerung in Form der Fernsteuerung des Totaldrucktransmitters möglich.

Eine andere vorteilhafte Möglichkeit zur Fernsteuerung während des laufenden Prozesses ist die Benutzung eines mit dem Totaldrucktransmitter verbundenen Steuergeräts. Mittels eines Tastenbefehls wird der Druckschwellwert ausgewählt.

Durch Vorgabe einer Mehrzahl von Druckschwellwerten, aus denen einer ausgewählt wird, wird der Veränderungsvorgang vereinfacht und sicherer gemacht, da so weder für den Totaldrucktransmitter ungünstige Werte eingestellt werden können, noch eine umfangreiche Ermittelung des besten Wertes stattfinden muss.

Anhand eines Ausführungsbeispiels soll die Erfindung und ihre Weiterbildungen näher erläutert und weitere Vorteile aufgezeigt werden.

Der zur Durchführung des Verfahrens geeignete Totaldrucktransmitter weist ein erstes Sensorelement zur Messwerterfassung in einem ersten Druckbereich und ein zweites Sensorelement zur Messwerterfassung in einem zweiten, sich nach niedrigeren Drücken anschließenden Druckbereich auf, wobei sich die beiden Druckbereiche in einem Übergangsbereich überschneiden. Das erste Sensorelement umfasst einen Wärmeleitungssensor und ist für den ersten Druckbereich zwischen Atmopshärendruck und mittlerem Hochvakuum geeignet. Als zweites Sensorelement wird ein Heißkathodensensor im zweiten Druckbereich, dem Hochvakuum, verwendet. Diese Kombination hat sich für das nachfolgende Verfahren als vorteilhaft erwiesen. Prinzipiell denkbar ist die Anwendung des Verfahrens auch für die Kombinationen Wärmeleitungssensor mit Kaltkathodensensor und Piezosensor mit Wärmeleitungssensor. Weiterhin ist es denkbar, statt zwei Sensoren drei Sensoren zu verwenden.

Neben den beiden Sensoren weist der Totaldrucktransmitter eine Elektronik auf. Diese versorgt die Sensoren mit notwendigen Betriebsspannungen, nimmt die von den Sensoren kommenden druckabhängigen Größen auf und wandelt sie derart um, dass sie an externe Geräte weitergegeben werden kann. Dies geschieht über eine digitale Schnittstelle, mit der die Elektronik des Totaldrucktransmitters von einem externen Gerät angesteuert wird. Das externe Gerät kann ein den Prozess steuernder Rechner, ein Steuergerät oder ein Handgerät sein.

Der Totaldrucktransmitter ist an einen Rezipienten angeschlossen, in dem ein vakuumtechnischer Prozess abläuft. Zu solchen Prozessen zählen Beschichtungsprozesse in der Solarindustrie, die Halbleiterherstellung, Gasanalysevorgänge, Lecksuchanwendungen und dergleichen.

Die Druckbereiche, in denen Wärmeleitungssensor und Heißkathodensensor verwendet werden, überlappen. Innerhalb dieses Überlappbereiches liegt ein Druckschwellwert. Erreicht der Druck im Rezipienten von hohen Drücken kommend den Druckschwellwert, wird der Heißkathodensensor eingeschaltet. Erreicht der Druck im Rezipienten den Druckschwellwert von niedrigen Drücken her, wird der Heißkathodensensor abgeschaltet, die Druckmessung erfolgt dann mittels des Wärmeleitungssensors.

Der Druckschwellwert ist veränderbar und wird innerhalb des Überlappbereichs auf einen dem Prozess angepassten Wert eingestellt. Diese Einstellung erfolgt mittels eines digitalen Schalteingangs an der Elektronik des Totaldrucktransmitters während einer der Sensoren, vorzugsweise der Wärmeleitungssensor, in Betrieb ist. Der digitale Schalteingang ist mit einem Prozessrechner verbunden, so dass dieser je nach vorliegenden Prozessanforderungen den Druckschwellwert des Totaldrucktransmitters einstellt.

Erreicht der Prozess einen Druck im zweiten Druckbereich, in dem der Heißkathodensensor benutzt wird, und erlaubt der Prozessablauf, für einige Zeit auf eine Druckmessung zu verzichten, wird der Heißkathodensensor abgeschaltet. Dadurch wird die Lebensdauer der Kathode erhöht und verhindert, dass die durch den Sensor entstehenden ionisierten Gasmoleküle mit dem Prozess wechselwirken.

Die Einstellung des Druckschwellwerts erfolgt derart, dass eine Liste von auf die Sensoren abgestimmten Werten in der Elektronik oder dem Prozessrechner abgelegt sind. Die Veränderung des Druckschwellwerts erfolgt dann durch Auswahl eines Wertes aus der Liste. In Weiterbildungen kann die Liste Druckschwellwerte umfassen, die vom Benutzer des Prozesses angelegt wurden.

Eine andere Weiterbildung schlägt vor, statt dem digitalen Eingang oder parallel zu ihm eine Steuergerät mit dem Totaldrucktransmitter zu verbinden. Über die Tastatur des Steuergerät erfolgt dann die Veränderung des Druckschwellwerts.

## Patentansprüche

1. Verfahren zum Betrieb eines Totaldrucktransmitters, welcher ein erstes Sensorelement zur Messwerterfassung in einem ersten Druckbereich und ein zweites Sensorelement zur Messwerterfassung in einem zweiten, sich nach niedrigeren Drücken anschließenden Druckbereich aufweist, wobei sich die beiden Druckbereiche in einem Übergangsbereich überschneiden, **dadurch gekennzeichnet, dass** der Druckschwellwert, bei dem das zweite Sensorelement eingeschaltet wird, während des Betriebes eines der Sensorelemente verändert wird.

2. Verfahren nach Anspruch 1, **dadurch gekennzeichnet, dass** der Druckschwellwert während des Betriebes des ersten Sensorlements verändert wird.

3. Verfahren nach Anspruch 1 oder 2, **dadurch gekennzeichnet, dass** im zweiten Druckbereich das zweite Sensorelement für eine benutzerdefinierte Zeit abgeschaltet wird.

4. Verfahren nach einem der vorhergehenden Ansprüche, **dadurch gekennzeichnet, dass** als erstes Sensorelement ein Wärmeleitungssensor und als zweites Sensorelement ein Heißkathodensensor verwendet wird.

5. Verfahren nach einem der vorhergehenden Ansprüche, **dadurch gekennzeichnet, dass** der Druckschwellwert mittels eines elektronischen, insbesondere ein digitalen, Schalteinganges an einer Elektronik des Totaldrucktransmitters verändert wird.

6. Verfahren nach einem der Ansprüche 1 bis 5, **dadurch gekennzeichnet, dass** der Druckschwellwert mittels eines Tastenbefehls eines mit dem Totaldrucktransmitter verbundenen Steuergeräts verändert wird.

7. Verfahren nach einem der vorhergehenden Ansprüche, **dadurch gekennzeichnet, dass** der Druckschwellwert aus einer Mehrzahl von Werten ausgewählt wird.

## Claims

1. A method of operating a total pressure transmitter which has a first sensor element for measured value detection in a first pressure range and a second sensor element for measured value detection in a second pressure range adjoining towards lower pressures, wherein the two pressure ranges overlap in a transition range, **characterised in that** the threshold pressure value at which the second sensor element is switched on is varied during the operation of one of the sensor elements.

2. A method in accordance with claim 1, **characterised in that** the threshold pressure value is varied during the operation of the first sensor element.

3. A method in accordance with claim 1 or claim 2, **characterised in that** the second sensor element in the second pressure range is switched off for a user-defined time.

4. A method in accordance with any one of the preceding claims, **characterised in that** a heat conduction sensor is used as the first sensor element and a hot cathode sensor is used as the second sensor element.

5. A method in accordance with any one of the preceding claims, **characterised in that** the threshold pressure value is varied by means of an electronic switch input, in particular a digital switch input, at an electronic system of the total pressure transmitter.

6. A method in accordance with any one of the claims 1 to 5, **characterised in that** the threshold pressure value is varied by means of a key command of a control unit connected to the total pressure transmitter.

7. A method in accordance with any one of the preceding claims, **characterised in that** the threshold pressure value is selected from a plurality of values.

## Revendications

1. Procédé pour le fonctionnement d'un transmetteur de pression totale, qui comprend un premier élément capteur pour la détection de valeurs de mesure dans une première plage de pression et un second élément capteur pour la détection de valeurs de mesure dans une seconde plage de pression qui fait suite vers des pressions plus faibles, dans lequel les deux plages de pression se recoupent dans une plage de transition, **caractérisé en ce que** la valeur seuil de pression à laquelle le second élément capteur est mis en service est modifiée pendant le fonctionnement de l'un des éléments capteurs.

2. Procédé selon la revendication 1, **caractérisé en ce que** la valeur seuil de pression est modifiée pendant le fonctionnement du premier élément capteur.

3. Procédé selon la revendication 1 ou 2, **caractérisé en ce que** dans la seconde plage de pression le second élément capteur est coupé pour un temps défini par l'utilisateur.

4. Procédé selon l'une des revendications précédentes, **caractérisé en ce que** l'on utilise comme premier élément capteur un capteur de conduction thermique, et comme second élément capteur un capteur à cathode chaude.

5. Procédé selon l'une des revendications précédentes, **caractérisé en ce que** la valeur seuil de pression est modifiée au moyen d'une entrée de commutation électronique, en particulier une entrée de commutation numérique au niveau d'une unité électronique du transmetteur de pression totale.

6. Procédé selon l'une des revendications 1 à 5, **caractérisé en ce que** la valeur seuil de pression est modifiée au moyen d'un ordre d'une touche d'un appareil de commande relié au transmetteur de pression totale.

7. Procédé selon l'une des revendications précédentes, **caractérisé en ce que** la valeur seuil de pression est choisie parmi une pluralité de valeurs.
